# EUROPEAN PATENT SPECIFICATION

(11) **EP 1 452 055 B1**
(45) Date of publication and mention of the grant of the patent: **20.06.2007**
(21) Application number: 01274878.6
(22) Date of filing: 04.12.2001
(51) Int. Cl.: H04Q 7/38, H04Q 7/28

(54) **PORT NUMBER BASED RADIO RESOURCE MANAGEMENT OF PACKET DATA**
FUNKBETRIEBSMITTELVERWALTUNG VON PAKETDATEN AUF PORTNUMMERBASIS
GESTION DE RESSOURCES RADIO BASEE SUR LE NUMERO DE PORT DE PAQUETS DE DONNEES

(43) Date of publication of application: 01.09.2004
(73) Proprietor: Nokia Corporation, 02150 Espoo (FI)
(72) Inventor: KOLA, Tero, FIN-00200 Helsinki (FI); WIGARD, Jeroen, DK-9220 Aalborg (DK); SILLASTO, Eero, FIN-00170 Helsinki (FI)
(74) Representative: Simmelvuo, Markku Kalevi
(86) International application number: PCT/FI2001/001055
(87) International publication number: WO 2003/049481

(56) References cited:
- EP-A2- 1 168 730
- WO-A1-01/62032
- WO-A2-01/31938
- US-A1- 2001 032 262

## Description

### FIELD OF THE INVENTION

The present invention relates to telecommunications. In particular, the present invention relates to a novel and improved method for providing port number based radio resource management for packet data in a radio communication system.

### BACKGROUND OF THE INVENTION

Radio communication systems such as mobile networks have started to provide packet data services for the users in addition to circuit switched services in the last few years. A packet data service is typically a service in which information symbols are transmitted within data packets. The size and length of the data packets may vary. The information symbols are typically carried by means what are often referred to as packet data bearers. The transmission speed of a bearer is defined by a parameter referred to as bit rate. More particularly, bit rate defines the bit rate allocated for a user of the packet data services. For example, in the WCDMA (Wideband Code Division Multiple Access) based systems bit rate values such as 16, 32, 64, 128 and 384 kbits may be used.

Packet data traffic may include various kinds of data, such as short messages or text only emails, transmission of large documents in the background, and interactive browsing of the World Wide Web (WWW). To give an example about packet data traffic, an ETSI (European Telecommunications Standards Institute) packet data model is shortly described here. A packet service session may contain one or several packet calls depending on the application. The packet data call may also be based on a non-real time (NRT) packet data service. During a packet call several packets may be generated, which means that the packet call constitutes typically a bursty sequence of packets. To give an example, in a web browsing session a packet call corresponds to the downloading of a part of the document (WWW-page). Each packet call can be further divided into packets. After the document is entirely received by the user terminal, the user may spend some time by studying the information he has just received before taking some further action such as requesting more data. Thus the traffic may be very bursty and the amount of traffic may be difficult to predict.

The non-real time packet services via an air interface are different from real time (RT) services (i.e. circuit switched services) via an air interface. Firstly, as mentioned, packet data is bursty. The required bit rate can change rapidly from zero to hundreds of kilobits per second. Packet data tolerates longer delay times than circuit switched services. Therefore the packet data traffic may be more readily controlled from a radio access network point of view. For example, in interactive services a user must get resources within reasonable time, but in background type services data can be transmitted when free radio interface capacity can be allocated for the transmission. In addition to non-real time services, it is also possible to transmit real time services, e.g. UMTS QoS (Universal Mobile Telecommunication System; Quality of Service) classes such as conversational class (telephone conversations, video) and streaming class (streaming multimedia) data transmission over packet networks. An example of real time packet data traffic is transmission of voice over IP (Internet Protocol), i.e. so called Internet calls. NRT QoS classes are often referred to as Interactive (for instance web browsing, games) and background (for instance downloading of emails) classes.

The functionality employed to fill any 'empty' capacity the packet data bearers may have is commonly known as packet scheduling. Empty capacity refers to potential capacity not currently used e.g. by circuit switched data, speech or signaling traffic. In other words, packet scheduling tries to find any potential remaining network capacity for packet data. More particularly, the function of packet scheduling is to allocate, modify and release bit rates for the packet data service users in transport channels based on specific predefined parameters.

Thus a packet scheduler is a functional entity of a radio communication system allocating radio resources for packet switched packet data users on a best effort basis. Typically a packet scheduler is part of the radio resource management functionality. A packet scheduler allocates radio resources on demand, meaning that resources are reserved only when there is data to transmit.

Prior art packet schedulers select an appropriate transport channel and bit rate for packet switched users according to current allocations, system load, radio performance of different transport channels, load of common channels and transport channel traffic volumes. When the data is sent and inactivity occurs, resources are released if inactivity lasts a certain time period determined by an inactivity timer. In a WCDMA based system the applicable transport channels for packet data transfer are Dedicated Transport Channel (DCH) in uplink and downlink direction, Random Access Channel (RACH) in uplink direction, Forward Access Channel (FACH) in downlink direction, Common Packet Channel (CPCH) in uplink direction, and Downlink Shared Channel (DSCH) in downlink direction.

WO 01/31938 A2 describes a method for the dynamic allocation of resources in a digital radio communication system (eg. UMTS) using a resource manager.

In prior art packet scheduling channel type selection and bit rate allocation is problematic because the nature of data is unknown. Thus also defining the lengths of inactivity timers is difficult. Since different applications have different characteristics of signaling sequences, packet sizes and statistical distributions of data amounts, it makes packet data traffic more predictable if the association to application (i.e. TCP/UDP (Transmission Control Protocol, User Datagram Protocol) port number) and typical characteristics of that application can be done.

Thus there is need for a solution improving the performance of radio resource management in general and packet schedulers in particular by making it possible to make said association to application and typical characteristics of that application.

### SUMMARY OF THE INVENTION

The present invention concerns a method and a system for managing radio resources for packet data in a radio communication system. Packet data to be transmitted is received. Packet data is composed of packet switched traffic which may comprise several kinds of services, such as web browsing, WAP (Wireless Application Protocol), SMS (Short Message Service), MMS (Multimedia Messaging Service), streaming services and email. Radio resources are managed for said packet data to be transmitted.

In the art radio resource management refers to functionalities responsible for the utilization of air interface resources. In the art radio resource management is typically divided into handover, power control, admission control, load control and packet scheduling functionalities.

According to the invention managing radio resources comprises retrieving transport layer protocol source port number from the packet data to be transmitted. Transport layer protocol is a commonly known term in the art referring to a telecommunication protocol providing functions defined as transport layer functions in the OSI reference model (Open Systems Interconnection). Transport layer is the fourth layer in the OSI model, and its functions comprise managing the end-to-end control (for example, determining whether all data packets have arrived), error-checking and ensuring complete data transfer. Examples of transport layer protocols are TCP-protocol (Transmission Control Protocol) and UDP-protocol (User Datagram Protocol). Source port numbers are used to identify the sending applications. Further according to the invention managing radio resources comprises generating port number specific statistical models of traffic associated with various transport layer protocol port numbers. For each port number statistics of e.g. packet size, application and transport protocol behavior, total amount of downloaded user data and total amount of uploaded user data may be collected. Thus it can be determined with a certain probability both what is the used service and what is the behavior of said service during downloading and uploading when the port number is known. Preferably the statistical models are generated once while initiating the system after which the same models are repeatedly utilized. However, the models may also be re-generated in part or in whole at predetermined intervals or in parallel with the execution of the radio resource management. Further according to the invention managing radio resources comprises allocating radio resources for the packet data to be transmitted based on the retrieved port number and its associated statistical model.

In an embodiment of the invention allocating radio resources further comprises at least one of the following: scheduling of packets, managing of power control settings for the packet data to be transmitted, managing of handovers, controlling the release timers, controlling the load of the radio communication system, and admission control.

If the radio communication system has high load and the statistical models indicate that the packet data need only little amount of capacity, the admission control accepts the packet data to be transmitted. If the statistical models show that the connection usually needs a lot of capacity, the connection is rejected. Controlling the load of the radio communication system refers to the load control of either one cell or multiple cells.

In an embodiment of the invention the radio communication system comprises one or more dedicated transport channels and one or more shared and/or common transport channels. The term transport channel is used to refer both to dedicated channels and shared/common channels. A dedicated transport channel refers to a type of transport channel used to transmit data packets of one service at a time. A shared or common transport channel refers to a type of transport channel used to transmit data packets of several services simultaneously.

In an embodiment of the invention allocating radio resources further comprises selecting an appropriate transport channel to be used in transmitting the data based on the retrieved port number and its associated statistical model. In one embodiment of the invention the generating of the statistical models and the selection of the transport channels are executed in parallel.

In an embodiment of the invention an appropriate bit rate for the selected transport channel is selected based on the retrieved port number and its associated statistical model.

In an embodiment of the invention generating port number specific statistical models further comprises analyzing characteristics of the traffic, and subsequently building the port number specific statistical models based on the analyzed characteristics of the traffic.

In an embodiment of the invention at least one general statistical model of the traffic is built. General in this context refers to non-port number specific.

In an embodiment of the invention the characteristics of the traffic comprise number and size of small packets at the start. Said small packets are typically exchanged at the start of a connection to setup a service. The characteristics further comprise number and size of small packets at the end, since some small packets are typically exchanged also at the end of a connection. The characteristics further comprise number and size of packet calls, and inactivity time, which refers to the time between packet calls. For example in the context of web browsing the inactivity time may be the time user spends reading a received document.

In an embodiment of the invention a shared or common transport channel is selected for packet data with a port number associated with bursty traffic.

In an embodiment of the invention a dedicated transport channel is selected for packet data with a port number associated with stable and/or long lasting traffic. Further in one embodiment of the invention the shared and/or common transport channel is allocated to the packet data associated to the port numbers which does not require the benefits of soft handover to fulfill the QoS requirements of the traffic. Thus capacity from the other base stations and from transport network interfaces usually associated to the soft handover are saved for other traffic. This is because in radio access networks like WCDMA based UTRAN, the DCH channel is the only transport channel which supports soft handover.

In one embodiment of the invention the radio resource management parameters are taken into account in the step of selecting the transport channel. Radio resource management parameters comprise at least one of the following ones: the load of the current cell, the load of the different transport channels, the load of neighbor cells and the load of different systems (GSM, WLAN, UTRAN, GERAN, IP RAN) in case of multiradio systems.

In an embodiment of the invention the radio communication system is WCDMA-based (Wideband Code Division Multiple Access). Examples of WCDMA-based radio communication systems are the Third Generation Mobile Telecommunications systems such as UMTS-system (Universal Mobile Telecommunication Services).In this embodiment of the invention the dedicated channels may comprise a DCH-channel (Dedicated Transport Channel). It should be noted that the terms DCH-channel and Dedicated Transport Channel are used to refer specifically to a DCH-channel of a WCDMA-system, whereas the terms dedicated channel and dedicated transport channel are used to refer to dedicated transport channels in general. Further in this embodiment of the invention the shared and/or common channels may comprise RACH- (Random Access Channel), FACH- (Forward Access Channel), CPCH- (Common Packet Channel) and/or DSCH-channels (Downlink Shared Channel).

In an embodiment of the invention the transport layer protocol is TCP-protocol (Transmission Control Protocol). TCP port numbers are used to distinguish among multiple programs executed in a single source / destination terminal in the art.

In an embodiment of the invention the transport layer protocol is UDP-protocol (User Datagram Protocol). UDP port numbers are used to distinguish among multiple programs executed in a single source / destination terminal in the art. Also some upper level protocols may be identified from the port numbers and the generating of statistical models can be arranged to utilize that information. One example of these upper level protocols is Wireless Transaction Protocol (WTP) of WAP.

In an embodiment of the invention the characteristics used in building the statistical models further comprise presence of TCP slow start, since it has an impact on packet distribution.

In an embodiment of the invention the transport layer protocol port number is retrieved by utilizing a transport layer protocol header compression algorithm performed by PDCP-layer (Packet Data Convergence Protocol) of WCDMA Layer 2 to process the transport layer protocol headers and subsequently to retrieve the port numbers from the headers. Header compression algorithms, such as the one specified in RFC 2507 by IETF (Internet Engineering Task Force), are known in the art that go through all the fields in TCP/UDP and IP headers and send only the delta of the headers, i.e. those fields that change in every header (e.g. checksum). Thus since the PDCP protocol processes TCP/UDP/IP headers while running the header compression algorithm, the 'Source port' field may be taken out and delivered e.g. to radio resource management which further processes the port number and associates it to the statistical traffic models.

The management of radio resources provides for achieving the needed Quality of Service (QoS) requirements, and allocates the resources from the system or network or cell which can fulfill said QoS requirements.

In one embodiment of the invention the radio resources are allocated from the network layer (i.e. microcell, macrocell, picocell) most suitable for the packet data to be transmitted.

In one embodiment of the invention the allocation of radio resources comprise the managing of handovers. The statistical models for different port numbers are taken into account while the decision of the handover is being made. If the statistical models show that there is still a lot more data packets to be sent over the air interface and there is need for handover, the system executes the handover. However, if the amount of data to be sent is small according to the statistical models, the handover is not executed. For example, if the statistical models indicate that the traffic or packet call from a specific port number has a typical size of x bytes and there is need to make a handover (relocation or anchoring) after x-100 bytes have been sent, the radio resource management system of the invention decides not to make handover if it will cause degradation in quality. This is because the radio resource management knows that there is only a small amount of data left to be sent.

In one embodiment of the invention the handover is made between different base stations. In a multiradio environment the handovers are made to other networks or systems such as GSM (Global System for Mobile Communication), CDMA (Code Division Multiple Access), Bluetooth or WLAN (Wireless Local Area Network) based radio access networks.

The invention improves the performance of radio resource management by making it possible to make the association to application and typical characteristics of that application. Further, the invention decreases unnecessary and disadvantageous channel allocation signaling overhead. Further, the invention increases the efficiency of radio resource management since less resources are being uselessly reserved. Further, the invention increases the efficiency of radio resource management since resource allocation takes into account application specific needs, thus the allocated bit rate is no more too big or too small as is often the case with prior art. Further, the better allocated resources typically provide better sense of service for the end user. Further, the invention prohibits handovers to improper radio networks, such as from an UTRAN (UMTS Terrestrial Radio Access Network) network to a GPRS (General Packet Radio services) or GERAN (GSM/EDGE Radio Access Network) network which typically would decrease bit rate too much.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig 1** is a flow chart illustrating a method according to one embodiment of the present invention,
**Fig 2** is a block diagram illustrating a system according to one embodiment of the present invention,
**Fig 3** further illustrates various characteristics of packet switched traffic, and
**Fig 4** further illustrates various protocols utilized in a radio resource management system according to the invention.

### DETAILED DESCRIPTION OF THE INVENTION

Reference will now be made in detail to the embodiments of the present invention, examples of which are illustrated in the accompanying drawings.

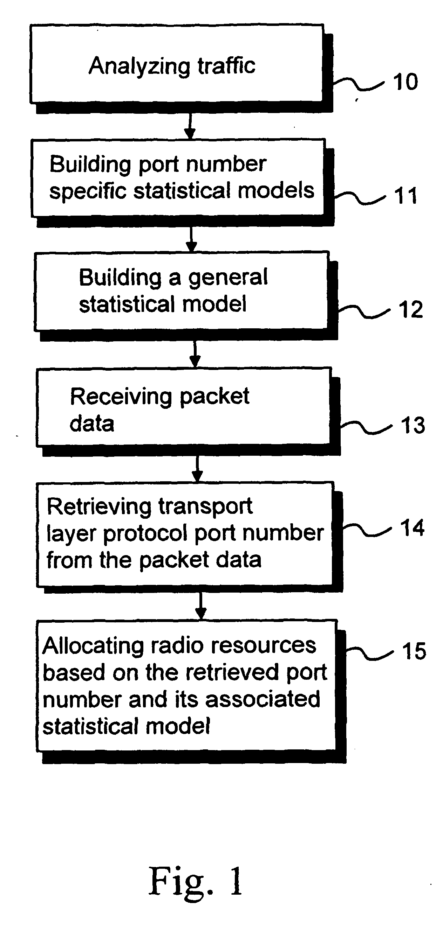

Figure 1 illustrates a method for radio resource management for non-real time or real time packet data in a radio communication system. In the embodiment of the invention disclosed in Figure 1 traffic associated with various transport layer protocol port numbers is analyzed, phase 10. Next port number specific statistical models for the analyzed traffic are built based on the characteristics of the traffic, phase 11. The characteristics of the traffic comprise number and size of small packets at the start, number and size of small packets at the end, number and size of packet calls, inactivity period, and the presence of TCP slow start. At least one general statistical model for the traffic is also built, phase 12. Next in phase 13 packet data to be transmitted is received. Transport layer protocol source port number from the packet data to be transmitted is retrieved, phase 14. Radio resources are allocated based on the retrieved port number and its associated statistical model, phase 15.

It should be noted that phases 10 - 15 may also happen in parallel and the statistical models may be dynamically adjusted. It should be further noted that other radio resource management parameters are preferably taken into account at phase 15. This means that while the transport channel is selected the load or the congestion situation of the corresponding cell and different channel types in the cell may be taken into account as well as the statistical models. For example, if the dedicated channels are very congested and the shared / common transport channels have free capacity, the algorithm favors shared / common transport channels.

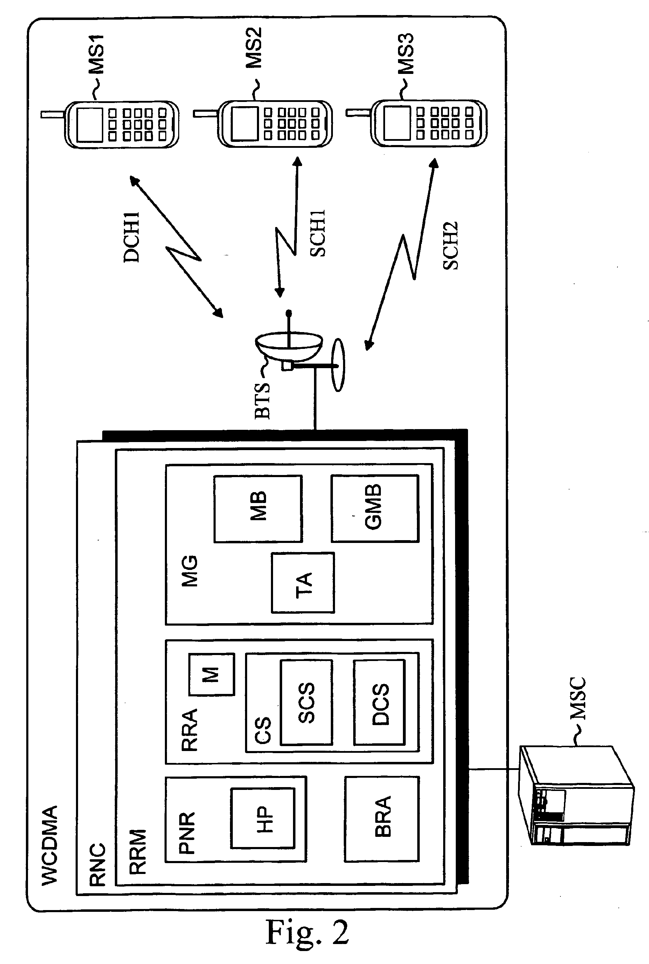

Figure 2 illustrates a radio resource management system for packet switched data in a WCDMA radio communication system comprising a dedicated transport channel DCH1 and shared and/or common transport channels SCH1 and SCH2. The radio communication system illustrated in Figure 2 is a WCDMA-based system, thus the dedicated channel is a DCH-channel and the shared and common channels are RACH-, FACH-, CPCH- and/or DSCH-channels. The radio communication system illustrated in Figure 2 further comprises a plurality of mobile stations MS1, MS2 and MS3. It should be noted that sometimes a mobile station in a WCDMA system may be referred to as user equipment. The radio communication system illustrated in Figure 2 further comprises a base transceiver station (or Base Station) BTS. It should be noted that sometimes a base transceiver station in a WCDMA system may be referred to as node B. The radio communication system illustrated in Figure 2 is further connected to a mobile switching center MSC or SGSN (Serving GPRS Support Node, not shown in the figure) which belongs to the core network. The mobile stations, the base transceiver station and the mobile switching center, their interconnections and functions are known in the art, and therefore are not discussed here further.

The radio resource management system illustrated in Figure 2 comprises a radio resource manager RRM for managing radio resources for received packet data to be transmitted. The radio resource manager further comprises a port number retriever PNR for retrieving transport layer protocol source port number from the packet data to be transmitted. The radio resource manager further comprises a model generator MG for generating port number specific statistical models of traffic associated with various transport layer protocol port numbers. The radio resource manager further comprises a radio resource allocator RRA for allocating radio resources for the packet data to be transmitted based on the retrieved port number and its associated statistical model. The radio resource allocator illustrated in Figure 2 further comprises a channel selector CS for selecting an appropriate transport channel to be used in transmitting the data based on the retrieved port number and its associated statistical model. The transport layer protocol used by the radio resource management system illustrated in Figure 2 is TCP-protocol. Alternatively the transport layer protocol used by the radio resource management system illustrated in Figure 2 may be UDP-protocol or some other transport layer protocol.

The radio resource allocator illustrated in Figure 2 further comprises means M for at least one of the following: scheduling of packets, managing of power control settings for the packet data to be transmitted, managing of handovers, controlling the release timers, controlling the load of the radio communication system, and admission control.

The radio resource manager illustrated in Figure 2 further comprises a bit rate allocator BRA for allocating an appropriate bit rate for the allocated transport channel based on the retrieved port number and its associated statistical model.

The model generator illustrated in Figure 2 further comprises a traffic analyzer TA for analyzing characteristics of the traffic, and a model builder MB for building the port number specific statistical models based on the analyzed characteristics of the traffic. The model generator illustrated in Figure 2 further comprises a general model builder GMB for building at least one general statistical model of the traffic. Said characteristics of the traffic comprise number and size of small packets at the start, number and size of small packets at the end, number and size of packet calls, inactivity period, and the presence of TCP slow start.

The channel selector illustrated in Figure 2 further comprises a shared / common channel selector SCS for selecting a shared or common transport channel for packet data with a port number associated with bursty traffic, and a dedicated channel selector DCS for selecting a dedicated transport channel for packet data with a port number associated with stable traffic.

The port number retriever illustrated in Figure 2 further comprises a header processor HP for processing the transport layer protocol headers by utilizing transport layer protocol header compression performed by PDCP-layer of WCDMA L2 in order to retrieve the transport layer protocol port number from the headers. The elements PNR, HP, BRA, CS, SCS, DCS, MG, TA, MB and GMB may be implemented with software or hardware or combination of the them. In the embodiment of the invention disclosed in Figure 2, the Radio resource manager (RRM) entity is located in Radio Network Controller (RNC). The elements of RRM may also be located separated from RNC. In one embodiment of the invention the RRM is located in BTS which is the preferred implementation in IP RAN (IP based Radio Access Network).

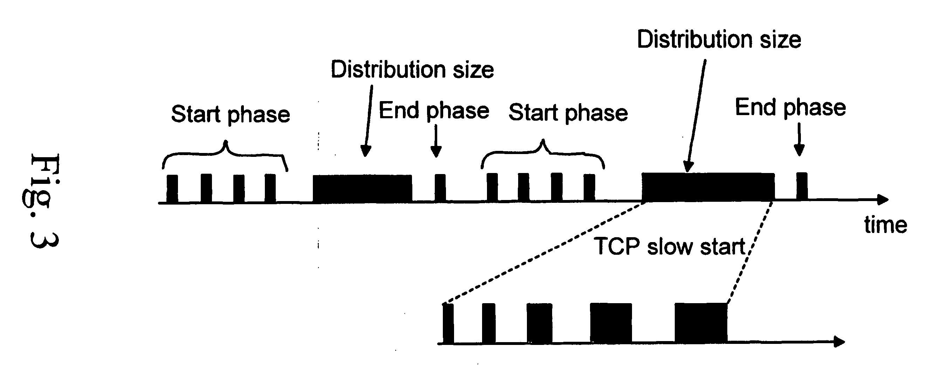

Figure 3 illustrates various characteristics of packet switched traffic utilized in building the port number specific statistical models by a model builder such as the one illustrated in Figure 2. The traffic illustrated in Figure 3 is packet switched traffic comprising TCP data packets. It is commonly known to use TCP packets to transport data related to e.g. services such as HTTP (Hypertext Transfer Protocol), FTP (File Transfer Protocol), Telnet, SMTP (Simple Mail Transfer Protocol) and IMAP (Internet Message Access Protocol). A source port number transmitted in the header of a TCP packet indicates data related to which service a given TCP packet carries within. Two consecutive connections are illustrated in Figure 3. As illustrated in Figure 3, at the start of a connection, also sometimes referred to as the start phase, some small messages are exchanged in order to setup the connection (TCP connection in the example of figure 3) or service to be transported. In some embodiments of the invention the services are setup in the application layer which means that small data packets are sent before the application layer service can be used. At the end of a connection, sometimes also referred to as the end phase, some small messages are also exchanged. The number and size of packet calls is sometimes also referred to as the distribution size, as illustrated in Figure 3. TCP slow start refers to a phenomenon typical to TCP packet calls, in which the size of packet calls is relatively small at the beginning and increases towards the end, as illustrated in Figure 3.

The packet switched traffic may also comprise UDP data packets. The traffic which uses UDP as a transport protocol comprise for example WAP (Wireless Application Protocol) and SNMP (Simple Network Management Protocol) traffic.

These characteristics illustrated in Figure 3 typically vary according to the service being transported. Thus, if traffic is analyzed and port number specific statistical models are built based on the analysis, it becomes possible to discern within a certain probability what is the used service and what is the behavior of that service during uploading and downloading, when the port number associated with that service is known. Different characteristics also mean that traffic should be put on a transport channel according to its characteristics. Very bursty traffic, e.g. a WAP transaction using WTP protocol, should preferably be put on the DSCH channel on a WCDMA system, whereas long lasting and more stable traffic, e.g. a large email download, may be better off when put on a DCH channel on a WCDMA system. Remark that also the stable traffic may have bursty setup phase. Preferably the generated statistical models take that into account by allocating shared or common channels to the bursty setup traffic and allocating a dedicated channel to the packet data when the traffic has become more stable. One example of this kind of traffic is downloading of email. The setup of the email session setup may be very bursty and the downloading of the email after the setup may be very stable. SMS services and control messages at the start of a connection on the other hand should preferably be put on common channels if the radio resource management parameters allow that, i.e. there is enough capacity in the common channels.

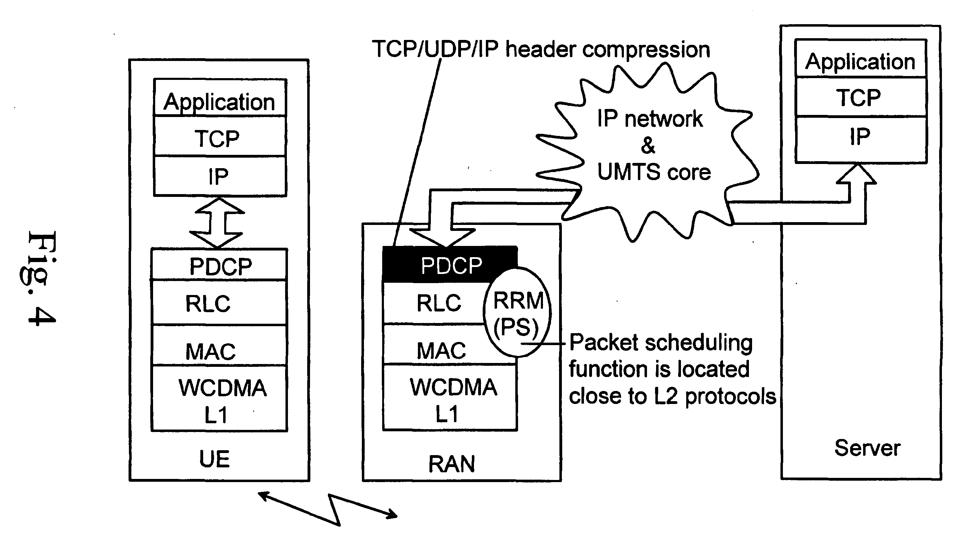

Figure 4 illustrates various protocols and functions utilized in a radio resource management system according to the invention and in a radio communication system in which it is implemented. The radio communication system illustrated in Figure 4 is a WCDMA based UMTS network. Figure 4 further illustrates one embodiment of how to implement a packet scheduling function according to the invention in relation to already existing protocol stacks in the system. In Figure 4 it is illustrated a User Equipment UE, a Radio Access Network RAN and a Server, as well as their respective protocol stacks. The User Equipment is equivalent to the mobile station illustrated in Figure 2. The Radio Access Network is equivalent to the combination of the Radio Network Controller (RNC) and Base Transceiver Station (BTS) illustrated in Figure 2. The Server provides the other end point of a data connection. If the User Equipment is used e.g. for web browsing, the Server may preferably be the WWW-server (World Wide Web) providing the content being browsed. The Server communicates with the radio Access Network via an IP network and the UMTS core network. The protocol stacks implemented in the User Equipment illustrated in Figure 4 comprise physical Layer 1 of Wideband Code Division Multiple Access WCDMA L1. Protocol stack of Figure 4 further comprises protocol layer 2 (WCDMA L2) which can be divided to several sublayers. These sublayers comprise Medium Access control MAC, Radio Link Control RLC and Packet Data Convergence Protocol PDCP. On top of WCDMA L2 are Internet Protocol IP on layer 3, Transmission Control Protocol TCP on layer 4 and an application protocol. These protocols and their functions are known in the art, and therefore are not discussed here further. The protocol stacks implemented in the Server illustrated in Figure 4 comprise Internet Protocol IP, Transmission Control Protocol TCP and the application protocol.

The protocol stacks implemented in the Radio Access Network illustrated in Figure 4 comprise the Level 1 of Wideband Code Division Multiple Access WCDMA L1, layer 2 of WCDMA (comprising Medium Access control MAC, Radio Link Control RLC, and Packet Data Convergence Protocol PDCP). As illustrated in Figure 4, the packet scheduling function PS according to the invention is preferably implemented close to Level 2 protocols in Radio Resource Management RRM. The TCP/UDP/IP header compression is utilized by the PDCP, as illustrated in Figure 4.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for radio resource management for packet data in a radio communication system, said method comprising the steps of:
receiving packet data to be transmitted, and
managing radio resources for said packet data to be transmitted,
**characterized in that** the step of managing radio resources further comprises the steps of:
retrieving transport layer protocol source port number from the packet data to be transmitted,
generating port number specific statistical models of traffic associated with various transport layer protocol port numbers, and
allocating radio resources for the packet data to be transmitted based on the retrieved port number and its associated statistical model.

2. The method according to claim 1, **characterized in that** the step of allocating radio resources further comprises at least one of the following steps:
scheduling of packets,
managing of power control settings for the packet data to be transmitted,
managing of handovers,
controlling the release timers,
controlling the load of the radio communication system, and
admission control.

3. The method according to claims 1 or 2, **characterized in that** the radio communication system comprises one or more dedicated transport channels and one or more shared and/or common transport channels.

4. The method according to claim 3, **characterized in that** the step of allocating radio resources further comprises the step of:
selecting an appropriate transport channel to be used in transmitting the data based on the retrieved port number and its associated statistical model.

5. The method according to claim 4, **characterized in that** the method further comprises the step of:
selecting an appropriate bit rate for the selected transport channel based on the retrieved port number and its associated statistical model.

6. The method according to any of claims 1 - 5, **characterized in that** the step of generating port number specific statistical models further comprises the steps of:
analyzing characteristics of the traffic, and
building the port number specific statistical models based on the analyzed characteristics of the traffic.

7. The method according to any of claims 1 - 6, **characterized in that** the method further comprises the steps of:
building at least one general statistical model of the traffic.

8. The method according to claims 6 or 7, **characterized in that** the characteristics of the traffic comprise:
number and size of small packets at the start,
number and size of small packets at the end,
number and size of packet calls, and
inactivity period.

9. The method according to any of claims 4 - 8, **characterized in that** the method further comprises the step of:
selecting a shared or common transport channel for packet data with a port number associated with bursty traffic.

10. The method according to any of claims 4 - 9, **characterized in that** the method further comprises the step of:
selecting a dedicated transport channel for packet data with a port number associated with stable traffic.

11. The method according to any of claims 4 - 10, **characterized in that** radio resource management parameters are taken into account in the step of selecting the transport channel.

12. The method according to any of claims 1 - 11, **characterized in that** the radio communication system is WCDMA-based.

13. The method according to claim 12, **characterized in that** the dedicated channels comprise a DCH-channel.

14. The method according to claims 12 or 13, **characterized in that** the shared and common channels comprise RACH-, FACH-, CPCH- and DSCH-channels.

15. The method according to any of claims 1 - 14, **characterized in that** the transport layer protocol is TCP-protocol.

16. The method according to any of claims 1 - 14, **characterized in that** the transport layer protocol is UDP-protocol.

17. The method according to claim 15, **characterized in that** the characteristics of the traffic further comprise the presence of TCP slow start.

18. The method according to any of claims 12 - 17, **characterized in that** the transport layer protocol port number is retrieved by utilizing transport layer protocol header compression performed by PDCP-protocol of WCDMA Layer 2 to process the transport layer protocol headers and subsequently to retrieve the port number from the headers.

19. A radio resource management system for packet data in a radio communication system (WCDMA), said radio resource management system comprising:
a radio resource manager (RRM) for managing radio resources for received packet data to be transmitted,
**characterized in that** the radio resource manager further comprises:
a port number retriever (PNR) for retrieving transport layer protocol source port number from the packet data to be transmitted,
a model generator (MG) for generating port number specific statistical models of traffic associated with various transport layer protocol port numbers, and
a radio resource allocator (RRA) for allocating radio resources for the packet data to be transmitted based on the retrieved port number and its associated statistical model.

20. The system according to claim 19, **characterized in that** the radio resource allocator further comprises means (M) for at least one of the following:
scheduling of packets,
managing of power control settings for the packet data to be transmitted,
managing of handovers,
controlling the release timers,
controlling the load of the radio communication system, and
admission control.

21. The system according to claims 19 or 20, **characterized in that** the radio communication system comprises one or more dedicated transport channels (DCH1, DCH2,...,DCHN) and one or more shared and/or common transport channels (SCH1,SCH2,...,SCHN).

22. The system according to claim 21, **characterized in that** the radio resource allocator further comprises:
a channel selector (CS) for selecting an appropriate transport channel to be used in transmitting the data based on the retrieved port number and its associated statistical model.

23. The system according to claim 22, **characterized in that** the radio resource manager further comprises:
a bit rate allocator (BRA) for allocating an appropriate bit rate for the allocated transport channel based on the retrieved port number and its associated statistical model.

24. The system according to any of claims 19 - 23, **characterized in that** the model generator further comprises:
a traffic analyzer (TA) for analyzing characteristics of the traffic, and
a model builder (MB) for building the port number specific statistical models based on the analyzed characteristics of the traffic.

25. The system according to any of claims 19 - 24, **characterized in that** the model generator further comprises:
a general model builder (GMB) for building at least one general statistical model of the traffic.

26. The system according to claims 24 or 25, **characterized in that** the characteristics of the traffic comprise:
number and size of small packets at the start,
number and size of small packets at the end,
number and size of packet calls, and
inactivity period.

27. The system according to any of claims 22 - 26, **characterized in that** the channel selector further comprises:
a shared/common channel selector (SCS) for selecting a shared or common transport channel for packet data with a port number associated with bursty traffic.

28. The system according to any of claims 22 - 27, **characterized in that** the channel selector further comprises:
a dedicated channel selector (DCS) for selecting a dedicated transport channel for packet data with a port number associated with stable traffic.

29. The system according to any of claims 22 - 28, **characterized in that** radio resource management parameters are taken into account in the channel selector while selecting the transport channel.

30. The system according to any of claims 19 - 29, **characterized in that** the radio communication system is WCDMA-based.

31. The system according to claim 30, **characterized in that** the dedicated channels comprise a DCH-channel.

32. The system according to claim 30 or 31, **characterized in that** the shared and common channels comprise RACH-, FACH-, CPCH- and DSCH-channels.

33. The system according to any of claims 19 - 32, **characterized in that** the transport layer protocol is TCP-protocol.

34. The system according to any of claims 19 - 32, **characterized in that** the transport layer protocol is UDP-protocol.

35. The system according to claim 33, **characterized in that** the characteristics of the traffic further comprise the presence of TCP slow start.

36. The system according to any of claims 30 - 35, **characterized in that** the port number retriever further comprises:
a header processor (HP) for processing the transport layer protocol headers by utilizing transport layer protocol header compression performed by PDCP-layer of WCDMA L2 in order to retrieve the transport layer protocol port number from the headers.

## Patentansprüche

1. Verfahren für Funkressourcen-Verwaltung für Paketdaten in einem Funkkommunikationssystem, wobei das Verfahren die Schritte umfasst:
- Empfangen von zu übertragenden Paketdaten; und
- Verwalten von Funkressourcen für die zu übertragenden Paketdaten;
**dadurch gekennzeichnet, dass** der Schritt des Verwaltens von Funkressourcen weiter die Schritte umfasst:
- Abrufen der Quellportnummer des Transportschichtprotokolls aus den zu übertragenden Paketdaten;
- Erzeugen eines für die Portnummer spezifischen statistischen Modells von Verkehr, der mit verschiedenen Portnummern des Transportschichtprotokolls verknüpft ist; und
- Zuweisen von Funkressourcen für die zu übertragenden Paketdaten basierend auf der abgerufenen Portnummer und ihrem verknüpften statistischen Modell.

2. Verfahren nach Anspruch 1, **dadurch gekennzeichnet, dass** der Schritt des Verwaltens von Funkressourcen weiter mindestens einen der folgenden Schritte umfasst:
- Zeitplanung von Paketen;
- Verwalten von Leistungssteuerungseinstellungen für die zu übertragenden Paketdaten;
- Verwalten von Übergaben;
- Steuern der Freigabezeitgeber;
- Steuern der Last der Funkkommunikationssystems; und
- Zulassungssteuerung.

3. Verfahren nach Anspruch 1 oder 2, **dadurch gekennzeichnet, dass** das Funkkommunikationssystem einen oder mehrere dedizierte Transportkanäle und einen oder mehrere gemeinsam genutzte und/oder gemeinsame Transportkanäle umfasst.

4. Verfahren nach Anspruch 3, **dadurch gekennzeichnet, dass** der Schritt des Verwaltens von Funkressourcen weiter den Schritt umfasst:
- Auswählen eines geeigneten Transportkanals, der beim Übertragen der Daten verwendet werden soll, basierend auf der abgerufenen Portnummer und ihrem verknüpften statistischen Modell.

5. Verfahren nach Anspruch 4, **dadurch gekennzeichnet, dass** das Verfahren weiter den Schritt umfasst:
- Auswählen einer geeigneten Bitrate für den ausgewählten Transportkanal, basierend auf der abgerufenen Portnummer und ihrem verknüpften statistischen Modell.

6. Verfahren nach irgendeinem der Ansprüche 1 bis 5, **dadurch gekennzeichnet, dass** der Schritt des Erzeugens eines für die Portnummer spezifischen statistischen Modells weiter die Schritte umfasst:
- Analysieren von Charakteristiken des Verkehrs; und
- Aufbauen des für die Portnummer spezifischen statistischen Modells basierend auf den analysierten Charakteristiken des Verkehrs.

7. Verfahren nach irgendeinem der Ansprüche 1 bis 6, **dadurch gekennzeichnet, dass** das Verfahren weiter den Schritt umfasst:
- Aufbauen von mindestens einem allgemeinen statistischen Modell des Verkehrs.

8. Verfahren nach Anspruch 6 oder 7, **dadurch gekennzeichnet, dass** die Charakteristiken des Verkehrs umfassen:
- Anzahl und Größe von kleinen Paketen am Beginn;
- Anzahl und Größe von kleinen Paketen am Ende;
- Anzahl und Größe von Paketgesprächen; und
- Inaktivitätsperiode.

9. Verfahren nach irgendeinem der Ansprüche 4 bis 8, **dadurch gekennzeichnet, dass** das Verfahren weiter den Schritt umfasst:
- Auswählen eines gemeinsam genutzten oder gemeinsamen Transportkanals für Paketdaten mit einer Portnummer, die mit Burst-artigem Verkehr verknüpft ist.

10. Verfahren nach irgendeinem der Ansprüche 4 bis 9, **dadurch gekennzeichnet, dass** das Verfahren weiter den Schritt umfasst:
- Auswählen eines dedizierten Transportkanals für Paketdaten mit einer Portnummer, die mit stabilem Verkehr verknüpft ist.

11. Verfahren nach irgendeinem der Ansprüche 4 bis 10, **dadurch gekennzeichnet, dass** Parameter der Funkressourcenverwaltung bei dem Schritt des Auswählens des Transportkanals berücksichtigt werden.

12. Verfahren nach irgendeinem der Ansprüche 1 bis 11, **dadurch gekennzeichnet, dass** das Funkkommunikationssystem WCDMA-basiert ist.

13. Verfahren nach Anspruch 12, **dadurch gekennzeichnet, dass** die dedizierten Kanäle einen DCH-Kanal umfassen.

14. Verfahren nach Anspruch 12 oder 13, **dadurch gekennzeichnet, dass** die gemeinsam genutzten und gemeinsamen Kanäle RACH-, FACH-, CPCH- und DSCH-Kanäle umfassen.

15. Verfahren nach irgendeinem der Ansprüche 1 bis 14, **dadurch gekennzeichnet, dass** das Transportschichtprotokoll ein TCP-Protokoll ist.

16. Verfahren nach irgendeinem der Ansprüche 1 bis 14, **dadurch gekennzeichnet, dass** das Transportschichtprotokoll ein UDP-Protokoll ist.

17. Verfahren nach Anspruch 15, **dadurch gekennzeichnet, dass** die Charakteristiken des Verkehrs weiter das Vorhandensein eines TCP Slow Start umfassen.

18. Verfahren nach irgendeinem der Ansprüche 12 bis 17, **dadurch gekennzeichnet, dass** die Portnummer des Transportschichtprotokolls abgerufen wird durch Verwenden einer Transportschichtprotokoll-Datenkopfkompression, die von dem PDCP-Protokoll von WCDMA Layer 2 ausgeführt wird, um die Datenköpfe des Transportschichtprotokolls zu verarbeiten und nachfolgend die Portnummer aus den Datenköpfen abzurufen.

19. Funkressourcenverwaltungs-System für Paketdaten in einem Funkkommunikationssystem (WCDMA), wobei das Funkressourcenverwaltungs-System umfasst:
- eine Funkressourcenverwaltungs-Einrichtung (RRM) zum Verwalten von Funkressourcen für empfangene Paketdaten, die zu übertragen sind;
**dadurch gekennzeichnet, dass** die Funkressourcenverwaltungs-Einrichtung weiter umfasst:
- eine Portnummemabrufeinrichtung (PNR) zum Abrufen einer Quellportnummer des Transportschichtprotokolls aus den zu übertragenden Paketdaten;
- einen Modellgenerator (MG) zum Erzeugen eines für die Portnummer spezifischen statistischen Modells von Verkehr, der mit verschiedenen Portnummern des Transportschichtprotokolls verknüpft ist; und
- eine Funkressourcenzuweisungs-Einrichtung (RRA) zum Zuweisen von Funkressourcen für die zu übertragenden Paketdaten, basierend auf der abgerufenen Portnummer und ihrem verknüpften statistischen Modell.

20. System nach Anspruch 19, **dadurch gekennzeichnet, dass** die Funkressourcenzuweisungs-Einrichtung weiter Mittel (M) für mindestens eins der folgenden umfasst:
- Zeitplanung von Paketen;
- Verwalten von Leistungssteuerungseinstellungen für die zu übertragenden Paketdaten;
- Verwalten von Übergaben;
- Steuern der Freigabezeitgeber;
- Steuern der Last der Funkkommunikationssystems; und
- Zulassungssteuerung.

21. System nach Anspruch 19 oder 20, **dadurch gekennzeichnet, dass** das Funkkommunikationssystem einen oder mehrere dedizierte Transportkanäle (DCH1, DCH2, ..., DCHN) und einen oder mehrere gemeinsam genutzte und/oder gemeinsame Transportkanäle (SCH1, SCH2, ..., SCHN) umfasst.

22. System nach Anspruch 21, **dadurch gekennzeichnet, dass** die Funkressourcenzuweisungs-Einrichtung weiter umfasst:
- einen Kanalwähler (CS) zum Auswählen eines geeigneten Transportkanals, der beim Übertragen der Daten verwendet werden soll, basierend auf der abgerufenen Portnummer und ihrem verknüpften statistischen Modell.

23. System nach Anspruch 22, **dadurch gekennzeichnet, dass** die Funkressourcenverwaltungs-Einrichtung weiter umfasst:
- eine Bitratenzuweisungs-Einrichtung (BRA) zum Zuweisen einer geeigneten Bitrate für den zugewiesenen Transportkanal, basierend auf der abgerufenen Portnummer und ihrem verknüpften statistischen Modell.

24. System nach irgendeinem der Ansprüche 19 bis 23, **dadurch gekennzeichnet, dass** der Modellgenerator weiter umfasst:
- eine Verkehrsanalyseeinrichtung (TA) zum Analysieren von Charakteristiken des Verkehrs; und
- eine Modellaufbaueinrichtung (MB) zum Aufbauen des für die Portnummer spezifischen statistischen Modells basierend auf den analysierten Charakteristiken des Verkehrs.

25. System nach irgendeinem der Ansprüche 19 bis 24, **dadurch gekennzeichnet, dass** der Modellgenerator weiter umfasst:
- eine Aufbaueinrichtung eines allgemeinen Modells (GMB) zum Aufbauen von mindestens einem allgemeinen statistischen Modell des Verkehrs.

26. System nach Anspruch 24 oder 25, **dadurch gekennzeichnet, dass** die Charakteristiken des Verkehrs umfassen:
- Anzahl und Größe von kleinen Paketen am Beginn;
- Anzahl und Größe von kleinen Paketen am Ende;
- Anzahl und Größe von Paketgesprächen; und
- Inaktivitätsperiode.

27. System nach irgendeinem der Ansprüche 22 bis 26, **dadurch gekennzeichnet, dass** der Kanalwähler weiter umfasst:
- einen Wähler eines gemeinsam genutzten/gemeinsamen Kanals (SCS) zum Auswählen eines gemeinsam genutzten oder gemeinsamen Transportkanals für Paketdaten mit einer Portnummer, die mit Burst-artigem Verkehr verknüpft ist.

28. System nach irgendeinem der Ansprüche 22 bis 27, **dadurch gekennzeichnet, dass** der Kanalwähler weiter umfasst:
- einen Wähler eines dedizierten Kanals (DCS) zum Auswählen eines dedizierten Transportkanals für Paketdaten mit einer Portnummer, die mit stabilem Verkehr verknüpft ist.

29. System nach irgendeinem der Ansprüche 22 bis 28, **dadurch gekennzeichnet, dass** die Parameter der Funkressourcenverwaltung beim Auswählen des Transportkanals in dem Kanalwähler berücksichtigt werden.

30. System nach irgendeinem der Ansprüche 19 bis 29, **dadurch gekennzeichnet, dass** das Funkkommunikationssystem WCDMA-basiert ist.

31. System nach Anspruch 30, **dadurch gekennzeichnet, dass** die dedizierten Kanäle einen DCH-Kanal umfassen.

32. System nach Anspruch 30 oder 31, **dadurch gekennzeichnet, dass** die gemeinsam genutzten und gemeinsamen Kanäle RACH-, FACH-, CPCH- und DSCH-Kanäle umfassen.

33. System nach irgendeinem der Ansprüche 19 bis 32, **dadurch gekennzeichnet, dass** das Transportschichtprotokoll ein TCP-Protokoll ist.

34. System nach irgendeinem der Ansprüche 19 bis 32, **dadurch gekennzeichnet, dass** das Transportschichtprotokoll ein UDP-Protokoll ist.

35. System nach Anspruch 33, **dadurch gekennzeichnet, dass** die Charakteristiken des Verkehrs weiter das Vorhandensein eines TCP Slow Start umfassen.

36. System nach irgendeinem der Ansprüche 30 bis 35, **dadurch gekennzeichnet, dass** die Portnummemabruf-Einrichtung weiter umfasst:
- eine Datenkopfverarbeitungseinrichtung (HP) zum Verarbeiten der Datenköpfe des Transportschichtprotokolls durch Verwenden von Transportschichtprotokoll-Datenkopfkompression, die von dem PDCP-Protokoll von WCDMA L2 ausgeführt wird, um die Portnummer des Transportschichtprotokolls aus den Datenköpfen abzurufen.

## Revendications

1. Procédé destiné à la gestion des ressources radio pour des données par paquets dans un système de communication radio, ledit procédé comprenant les étapes suivantes :
recevoir des données par paquets devant être transmises, et
gérer des ressources radio pour lesdites données par paquets devant être transmises,
**caractérisé en ce que** l'étape consistant à gérer les ressources radio comprend en outre les étapes suivantes :
récupérer un numéro de port source de protocole de couche de transport des données par paquets devant être transmises,
générer des modèles statistiques spécifiques du numéro de port du trafic associés aux différents numéros de port de protocole de couche de transport, et
attribuer des ressources radio pour les données par paquets devant être transmises sur la base du numéro de port récupéré et de son modèle statistique associé.

2. Procédé selon la revendication 1, **caractérisé en ce que** l'étape consistant à attribuer des ressources radio comprend en outre au moins une des étapes suivantes :
la programmation de paquets,
la gestion des réglages de commande de puissance pour les données par paquets devant être transmises,
la gestion des transferts intercellulaires,
la commande des temporisateurs de libération,
la commande de la charge du système de communication radio, et
la commande de l'admission.

3. Procédé selon les revendications 1 ou 2, **caractérisé en ce que** le système de communication radio comprend un ou plusieurs canaux de transport réservés et un ou plusieurs canaux de transport communs et/ou partagés.

4. Procédé selon la revendication 3, **caractérisé en ce que** l'étape consistant à attribuer des ressources radio comprend en outre l'étape consistant à :
sélectionner un canal de transport approprié destiné à être utilisé dans la transmission des données sur la base du numéro de port récupéré et de son modèle statistique associé.

5. Procédé selon la revendication 4, **caractérisé en ce que** le procédé comprend en outre l'étape suivante :
sélectionner un débit binaire approprié pour le canal de transport sélectionné sur la base du numéro de port récupéré et de son modèle statistique associé.

6. Procédé selon l'une quelconque des revendications 1 à 5, **caractérisé en ce que** l'étape consistant à générer des modèles statistiques spécifiques du numéro de port comprend en outre les étapes suivantes :
analyser les caractéristiques du trafic, et
élaborer les modèles statistiques spécifiques du numéro de port sur la base des caractéristiques analysées du trafic.

7. Procédé selon l'une quelconque des revendications 1 à 6, **caractérisé en ce que** le procédé comprend en outre les étapes suivantes :
élaborer au moins un modèle statistique général du trafic.

8. Procédé selon les revendications 6 ou 7, **caractérisé en ce que** les caractéristiques du trafic comprennent :
le nombre et la taille des petits paquets au début,
le nombre et la taille des petits paquets à la fin,
le nombre et la taille des appels de paquets, et
la période d'inactivité.

9. Procédé selon l'une quelconque des revendications 4 à 8, **caractérisé en ce que** le procédé comprend en outre l'étape suivante :
sélectionner un canal de transport commun ou partagé pour des données par paquets avec un numéro de port associé au trafic en paquets.

10. Procédé selon l'une quelconque des revendications 4 à 9, **caractérisé en ce que** le procédé comprend en outre l'étape suivante :
sélectionner un canal de transport réservé aux données par paquets dont le numéro de port est associé à un trafic stable.

11. Procédé selon l'une quelconque des revendications 4 à 10, **caractérisé en ce que** les paramètres de gestion des ressources radio sont pris en compte à l'étape consistant à sélectionner le canal de transport.

12. Procédé selon l'une quelconque des revendications 1 à 11, **caractérisé en ce que** le système de communication radio est basé sur WCDMA.

13. Procédé selon la revendication 12, **caractérisé en ce que** les canaux réservés comprennent un canal DCH.

14. Procédé selon les revendications 12 ou 13, **caractérisé en ce que** les canaux communs et partagés comprennent des canaux RACH, FACH, CPCH et DSCH.

15. Procédé selon l'une quelconque des revendications 1 à 14, **caractérisé en ce que** le protocole de couche de transport est un protocole TCP.

16. Procédé selon l'une quelconque des revendications 1 à 14, **caractérisé en ce que** le protocole de couche de transport est un protocole UDP.

17. Procédé selon la revendication 15, **caractérisé en ce que** les caractéristiques du trafic comprennent en outre la présence d'un début lent de TCP.

18. Procédé selon l'une quelconque des revendications 12 à 17, **caractérisé en ce que** le numéro de port de protocole de couche de transport est récupéré en utilisant une compression d'en-tête de protocole de couche de transport exécutée par le protocole PDCP de la couche 2 WCDMA pour traiter les en-têtes de protocole de couche de transport et ensuite pour récupérer le numéro de port des en-têtes.

19. Système de gestion des ressources radio pour des données par paquets dans un système de communication radio (WCDMA), ledit système de gestion des ressources radio comprenant :
un gestionnaire des ressources radio (RRM) pour gérer les ressources radio pour les données par paquets reçues devant être transmises,
**caractérisé en ce que** le gestionnaire des ressources radio comprend en outre :
un récupérateur de numéro de port (PNR) pour récupérer le numéro de port source de protocole de couche de transport des données par paquets devant être transmises,
un générateur de modèle (MG) pour générer des modèles statistiques spécifiques du numéro de port du trafic associés à différents numéros de port de protocole de couche de transport, et
un allocateur des ressources radio (RRA) pour attribuer des ressources radio pour les données par paquets devant être transmises sur la base du numéro de port récupéré et de son modèle statistique associé.

20. Système selon la revendication 19, **caractérisé en ce que** l'allocateur des ressources radio comprend en outre un moyen (M) pour au moins l'un de ce qui suit :
la programmation de paquets,
la gestion des réglages de commande de puissance pour les données par paquets devant être transmises,
la gestion des transferts intercellulaires,
la commande des temporisateurs de libération,
la commande de la charge du système de communication radio, et
la commande d'admission.

21. Système selon les revendications 19 ou 20, **caractérisé en ce que** le système de communication radio comprend un ou plusieurs canaux de transport réservés (DCH1, DCH2, ..., DCHN) et un ou plusieurs canaux de transport communs et/ou partagés (SCH1, SCH2, ..., SCHN).

22. Système selon la revendication 21, **caractérisé en ce que** l'allocateur des ressources radio comprend en outre :
un sélecteur de canal (CS : channel selector) pour sélectionner un canal de transport approprié devant être utilisé dans la transmission des données sur la base du numéro de port récupéré et de son modèle statistique associé.

23. Système selon la revendication 22, **caractérisé en ce que** le gestionnaire des ressources radio comprend en outre :
un allocateur de débit binaire (BRA : bit rate allocator) pour attribuer un débit binaire approprié pour le canal de transport attribué sur la base du numéro de port récupéré et de son modèle statistique associé.

24. Système selon l'une quelconque des revendications 19 à 23, **caractérisé en ce que** le générateur de modèle comprend en outre :
un analyseur de trafic (TA : traffic analyzer) pour analyser les caractéristiques du trafic, et
un concepteur de modèle (MB : model builder) pour concevoir les modèles statistiques spécifiques du numéro de port sur la base des caractéristiques analysées du trafic.

25. Système selon l'une quelconque des revendications 19 à 24, **caractérisé en ce que** le générateur de modèle comprend en outre :
un concepteur de modèle général (GMB : général model builder) pour concevoir au moins un modèle statistique général du trafic.

26. Système selon les revendications 24 ou 25, **caractérisé en ce que** les caractéristiques du trafic comprennent :
le nombre et la taille des petits paquets au début,
le nombre et la taille des petits paquets à la fin,
le nombre et la taille des appels de paquets, et
la période d'inactivité.

27. Système selon l'une quelconque des revendications 22 à 26, **caractérisé en ce que** le sélecteur de canal comprend en outre :
un sélecteur de canal commun/partagé (SCS) pour sélectionner un canal de transport commun ou partagé pour des données par paquets avec un numéro de port associé à un trafic par salves.

28. Système selon l'une quelconque des revendications 22 à 27, **caractérisé en ce que** le sélecteur de canal comprend en outre :
un sélecteur de canal réservé (DCS) pour sélectionner un canal de transport réservé pour des données par paquets avec un numéro de port associé à un trafic stable.

29. Système selon l'une quelconque des revendications 22 à 28, **caractérisé en ce que** les paramètres de gestion des ressources radio sont pris en compte dans le sélecteur de canal tout en sélectionnant le canal de transport.

30. Système selon l'une quelconque des revendications 19 à 29, **caractérisé en ce que** le système de communication radio est basé sur WCDMA.

31. Système selon la revendication 30, **caractérisé en ce que** les canaux réservés comprennent un canal DCH.

32. Système selon la revendication 30 ou 31, **caractérisé en ce que** les canaux communs et partagés comprennent des canaux RACH, FACH, CPCH et DSCH.

33. Système selon l'une quelconque des revendications 19 à 32, **caractérisé en ce que** le protocole de couche de transport est un protocole TCP.

34. Système selon l'une quelconque des revendications 19 à 32, **caractérisé en ce que** le protocole de couche de transport est un protocole UDP.

35. Système selon la revendication 33, **caractérisé en ce que** les caractéristiques du trafic comprennent en outre la présence d'un début lent de TCP.

36. Système selon l'une quelconque des revendications 30 à 35, **caractérisé en ce que** le récupérateur de numéro de port comprend en outre :
un processeur d'en-tête (HP) destiné à traiter les en-têtes de protocole de couche de transport en utilisant une compression d'en-tête de protocole de couche de transport exécutée par la couche PDCP de L2 WCDMA afin de récupérer le numéro de port de protocole de couche de transport des en-têtes.
